# EUROPÄISCHE PATENTSCHRIFT

(11) **EP 3 099 540 B1**
(45) Veröffentlichungstag und Bekanntmachung des Hinweises auf die Patenterteilung: **20.11.2019**
(21) Anmeldenummer: 15701664.3
(22) Anmeldetag: 07.01.2015
(51) Int. Cl.: B60R 25/24, G07C 9/00

(54) **VERFAHREN ZUM BEREITSTELLEN EINES ARBEITSSIGNALS**
METHOD OF PREPARING AN OPERATING SIGNAL
PROCÉDÉ DE PRODUCTION D'UN SIGNAL DE TRAVAIL

(30) Priorität: 31.01.2014 DE 102014101192
(43) Veröffentlichungstag der Anmeldung: 07.12.2016
(60) Teilanmeldung: 19190031.5
(73) Patentinhaber: Huf Hülsbeck & Fürst GmbH & Co. KG, 42551 Velbert (DE)
(72) Erfinder: SCHINDLER, Mirko, 42549 Velbert (DE); STICHERLING, Nadine, 45257 Essen (DE); MÖNIG, Stefan, 58332 Schwelm (DE); SCHUMACHER, Helmut, 48653 Coesfeld (DE); ZIEGLER, Alexander, 42489 Wülfrath (DE); LINDIC, Iko, 45149 Essen (DE); HACHE, Christof, 42551 Velbert (DE); MÜLLER, Oliver, 42551 Velbert (DE); HELLER, Norbert, 47929 Grefrath (DE); YOMKIL MALABO, Jean, 45139 Essen (DE); ETTE, Bernd, 38442 Wolfsburg (DE)
(74) Vertreter: Patentanwälte Bals & Vogel
(86) Internationale Anmeldenummer: PCT/DE2015/100010
(87) Internationale Veröffentlichungsnummer: WO 2015/113556

(56) Entgegenhaltungen:
- WO-A1-2013/037806
- DE-A1-102007 050 094
- DE-A1-102008 021 989
- DE-A1-102009 023 594
- DE-A1-102010 056 171
- DE-A1-102011 115 760
- DE-B3-102005 032 402

## Beschreibung

Die Erfindung betrifft ein Verfahren zum Bereitstellen eines Arbeitssignals für ein Kraftfahrzeug gemäß dem Patentanspruch 1. Des Weiteren betrifft die Erfindung ein Authentifizierungssystem mit einem Montagemodul für ein Kraftfahrzeug gemäß dem unabhängigen Patentanspruch 11.

Aus der DE10 2005 034 402 B3 ist ein Verfahren zum Nachweis einer Berechtigung zum Ver- oder Entriegeln eines Objekts sowie eine entsprechende Sicherheitsvorrichtung bekannt, welches eine optoelektronische Messvorrichtung umfasst.

Die DE 10 2008 021 989 A1 offenbart ein Verfahren zum Bereitstellen eines Arbeitssignals für ein Kraftfahrzeug, bei dem ein sichtbares Bedienfeld bereitgestellt wird. Berührt der Benutzer das Bedienfeld z. B. mit einem Fuß, so ist nach einer Entriegelung einer Fahrzeugtür ein automatisches Öffnen der Fahrzeugtür einleitbar.

Nachteilig hieran ist, dass der Benutzer das Öffnen der Fahrzeugtür auch einleitet, wenn der Benutzer sich vollständig in dem Bedienfeld befindet. Hierbei kann der Benutzer von der Fahrzeugtür getroffen und verletzt werden. Ebenso kann das Öffnen der Fahrzeugtür eingeleitet werden, wenn z. B. eine Katze oder ein Hund durch das Bedienfeld läuft und der Benutzer selber sich unmittelbar an der Fahrzeugtür befindet, so dass der Benutzer auch in diesem Fall von der Fahrzeugtür getroffen und verletzt werden kann.

Es ist daher die Aufgabe der vorliegenden Erfindung, ein Verfahren und ein Montagemodul für ein Kraftfahrzeug bereitzustellen, das zumindest einen der vorgenannten Nachteile überwindet, insbesondere ein für den Benutzer gefahrloses Öffnen eines beweglichen Teils des Kraftfahrzeuges ermöglicht.

Zur Lösung der Aufgabe wird ein Verfahren mit sämtlichen Merkmalen des Anspruches 1 vorgeschlagen. Vorteilhafte Weiterbildungen des Verfahrens sind in den abhängigen Verfahrensansprüchen angegeben. Ferner wird ein Authentifizierungssystem mit einem Montagemodul, einem ID-Geber und einem Zugangskontrollsystem im Anspruch 11 unter Schutz gestellt.

Erfindungsgemäß weist das Verfahren die folgenden Schritte auf:
a) Erhalt eines Signals, dass ein berechtigter Benutzer authentifiziert ist,
b) Überwachung eines außerhalb des Kraftfahrzeugs liegenden Betätigungsbereichs durch ein optisches Sensorsystem,
c) Erfassung eines Abstandes eines Objektes im Betätigungsbereich zu einem optischen Sensor durch das optischen Sensorsystem,
d) Vergleich des Abstandes mit einer Vorgabe durch das optische Sensorsystem,
e) Bereitstellen eines Arbeitssignals bei Erfüllung der Vorgabe.

Insbesondere wird Schritt b) nach Schritt a) ausgeführt. Die Schritte c) und d) werden insbesondere während Schritt b) ausgeführt. Bei Erfüllen der Vorgabe wird insbesondere Schritt b) beendet und Schritt e) ausgeführt. Der Vergleich kann ein direkter Vergleich, in dem der in Schritt c) erfasste Abstand direkt mit der Vorgabe verglichen wird, oder ein indirekter Vergleich, in dem durch den Abstand eine weitere Größe bestimmt wird und diese dann mit der Vorgabe verglichen wird, sein. Anders ausgedrückt, wird in Schritt d) der in Schritt c) erfasste Abstand zu einer Vorgabe in Beziehung gesetzt.

Dadurch, dass ein Abstand eines Objekts im Betätigungsbereich zu dem optischen Sensor erfasst wird, und dieser Abstand eine Vorgabe erfüllen muss, damit das Arbeitssignal bereitgestellt wird, wird eine Bedingung für das Bereitstellen des Arbeitssignals geschaffen, so dass nicht jedes Objekt im Betätigungsbereich das Arbeitssignal auslöst. Bei Abständen, die nicht die Vorgabe erfüllen, wird kein Arbeitssignal bereitgestellt. Vielmehr wird das Arbeitssignal nur bereitgestellt, wenn die Vorgabe erfüllt ist. Durch die Bedingung wird erreicht, dass eine Handlung des Benutzers im Betätigungsbereich, durch die nicht das Arbeitssignal ausgelöst werden soll, oder ein nicht erwünschtes Objekt, wie z. B. ein Hund, im Betätigungsbereich das Arbeitssignal nicht auslöst. Vielmehr wird nur durch eine bewusste Handlung des Benutzers das Arbeitssignal ausgelöst. Die bewusste Handlung des Benutzers kann insbesondere mit einer Hand oder einem Fuß durchgeführt werden. Dadurch, dass das Arbeitssignal nicht unerwünscht oder unerwartet bereitgestellt wird, wird der Benutzer davon nicht überrascht. Vielmehr wird ein Benutzerwillen erkannt. Somit gefährdet der durch das Arbeitssignal ausgelöste Vorgang, z. B. das Öffnen eines beweglichen Teils des Kraftfahrzeugs, den Benutzer weniger.

Das Arbeitssignal kann ein Signal zum Entriegeln und/oder Verriegeln und/oder Öffnen und/oder Schließen eines beweglichen Teils des Kraftfahrzeuges sein. Bei dem beweglichen Teil kann es sich insbesondere um eine Heckklappe und/oder eine Seitentür des Kraftfahrzeuges handeln. Die Heckklappe und/oder die Seitentür kann als Schiebetür ausgebildet sein. Durch das Arbeitssignal kann das bewegliche Teil z. B. entriegelt werden. Durch die Federwirkung einer Dichtung kann sich das bewegliche Teil danach teilweise aus einer geschlossenen Stellung bewegen und somit teilweise öffnen.

Vorzugsweise entspricht die Vorgabe einer Mindestabstandsbedingung des Abstandes des Objekts zum optischen Sensor. Das Arbeitssignal wird somit nur dann bereitgestellt, wenn das Objekt dem optischen Sensor nicht zu nahe kommt. Hierdurch wird erreicht, dass der Benutzer weit genug vom optischen Sensor entfernt ist. Da der optische Sensor in der Nähe des beweglichen Teils eingebaut sein kann, kann hierdurch erreicht werden, dass der Benutzer sich weit genug entfernt von dem beweglichen Teil befindet. Somit kann die Sicherheit des Benutzers weiter erhöht werden.

Insbesondere kann die Vorgabe, insbesondere die Mindestabstandsbedingung, einem fest vorgegebenen und in dem optischen Sensorsystem hinterlegten Mindestabstand des Objekts zum optischen Sensor entsprechen. Nur wenn der Abstand des Objekts zum optischen Sensor den Mindestabstand überschreitet, wird das Arbeitssignal bereitgestellt. In dem optischen Sensorsystem, insbesondere in der Überwachungseinheit, kann ein absoluter Wert für den Mindestabstand des Objekts zum optischen Sensor gespeichert sein. Während der Überwachung des Betätigungsbereichs wird der Abstand des Objekts zum optischen Sensor erfasst. Nur wenn der erfasste Abstand größer als der Mindestabstand ist, ist die Vorgabe erfüllt. Der Mindestabstand kann mit einer Einbauhöhe, mit der der optische Sensor in das Kraftfahrzeug einzubauen ist, variieren. Ebenfalls kann der Mindestabstand von dem Neigungswinkel des optischen Sensors variieren. So kann der Mindestabstand größer gewählt werden, je größer die Einbauhöhe und/oder je geringer der Neigungswinkel gewählt ist. Die Wahl eines festen Mindestabstands zum optischen Sensor hat den Vorteil, dass als Vorgabe ein direkter Grenzwert für die in Schritt c) erfasste Größe gewählt ist und somit die Rechenkapazität des optischen Sensorsystems geschont wird. Ebenfalls müssen keine weiteren Größen bei der Wahl des festen Mindestabstands als Vorgabe erfasst werden.

Ebenfalls ist es denkbar, dass die Vorgabe, insbesondere die Mindestabstandsbedingung, einem Mindestwert für ein Verhältnis des Abstands des Objektes zum optischen Sensor zu einem Abstand einer Endfläche des Betätigungsbereichs zum optischen Sensor entspricht. Nur wenn durch einen entsprechenden Abstand des Objekts zum optischen Sensor der Mindestwert für das Verhältnis überschritten wird, wird das Arbeitssignal bereitgestellt. In dem optischen Sensorsystem, insbesondere in der Überwachungseinheit, kann ein absoluter Wert für den Mindestwert für das Verhältnis fest gespeichert sein. Der Abstand der Endfläche des Betätigungsbereichs zum optischen Sensor kann als fester Wert in dem optischen Sensorsystem hinterlegt oder vorzugsweise während der Überwachung vom optischen Sensorsystem erfasst werden. Während der Überwachung des Betätigungsbereichs wird der Abstand des Objekts zum optischen Sensor erfasst. Das Verhältnis des Abstands des Objekts zum optischen Sensor zum Abstand der Endfläche des Betätigungsbereichs zum optischen Sensor wird gebildet. Nur wenn das Verhältnis größer als der Mindestwert ist, ist die Vorgabe erfüllt. Der Mindestwert kann mit der Einbauhöhe und dem Neigungswinkel des optischen Sensors variieren. Insbesondere kann mit zunehmender Einbauhöhe und abnehmendem Neigungswinkel der Mindestwert erhöht sein.

Als eine weitere Möglichkeit kann vorgesehen sein, dass die Vorgabe, insbesondere die Mindestabstandsbedingung, einer fest vorgegebenen und in dem optischen Sensorsystem hinterlegten maximalen Entfernung einer dem optischen Sensor zugewandten Oberfläche des Objektes zu einer Endfläche des Betätigungsbereichs, die sich insbesondere an einer Bodenfläche befindet, entspricht. Nur wenn die Entfernung der dem optischen Sensor zugewandten Oberfläche des Objekts zu einer Endfläche des Betätigungsbereichs, insbesondere an der Bodenfläche, die maximale Entfernung unterschreitet, wird das Arbeitssignal bereitgestellt. In dem optischen Sensorsystem, insbesondere in der Überwachungseinheit, kann ein absoluter Wert für die maximale Entfernung gespeichert sein. Der Abstand der Endfläche des Betätigungsbereichs zum optischen Sensor kann als fester Wert in dem optischen Sensorsystem hinterlegt oder vorzugsweise während der Überwachung vom optischen Sensorsystem erfasst werden. Während der Überwachung des Betätigungsbereichs wird der Abstand des Objekts zum optischen Sensor erfasst. Aus dem Abstand der Endfläche des Betätigungsbereichs zum optischen Sensor und dem Abstand des Objekts zum optischen Sensor wird die Entfernung einer dem optischen Sensor zugewandten Oberfläche des Objekts zur Endfläche des Betätigungsbereichs, insbesondere zur Bodenfläche, bestimmt. Nur wenn die so bestimmte Entfernung kleiner als die maximale Entfernung ist, ist die Vorgabe erfüllt. Hierdurch wird eine weitere Möglichkeit geschaffen, eine variierende Länge des Betätigungsbereichs, insbesondere bei einer variierenden Bodenfläche, zu berücksichtigen.

Das optische Sensorsystem kann insbesondere anhand einer Intensitätsänderung des empfangenen Lichts bestimmen, dass sich ein Objekt in dem Betätigungsbereich befindet.

Um einen Abstand des Objektes zum optischen Sensor erfassen zu können, kann beispielsweise eine Time of Flight Messung durchgeführt werden. Hierbei werden z. B. ein oder mehrere Lichtpulse von dem optischen Sensorsystem, insbesondere von einem Lichtmodul des optischen Sensorsystems, emittiert und die Zeit, die der Lichtpuls zum Objekt und von dort zum optischen Sensor benötigt, gemessen. Die Zeit ist hierbei direkt proportional zum Abstand des Objektes. Es kann sein, dass mehrere Lichtpulse nacheinander von dem optischen Sensorsystem, insbesondere von dem Lichtmodul, emittiert werden, um ein Bild erzeugen zu können. Die Lichtpulse können aufintegriert oder aufsummiert werden, um das Bild zu erzeugen. Um in diesem Fall eine Abstandserfassung durchführen zu können, wird ein bestimmtes Zeitintervall für die Bildaufnahme in dem optischen Sensorsystem vorgegeben. Die gesamte Intensität der in dem optischen Sensor empfangenen Lichtpulse in dem Zeitintervall wird mit dem Abstand korreliert.

Um die Messgenauigkeit zu erhöhen, kann vorgesehen sein, dass ein Bild, das nur mit dem Licht, das vom optischen Sensorsystem, insbesondere von dem Lichtmodul, emittiert wurde, generiert wird. So kann es sein, dass Erkennungsbilder und Vergleichsbilder aufgenommen und gegebenenfalls ausgewertet werden. Erkennungsbilder entstehen mit Hilfe der Reflexion des emittierten Licht des Lichtmoduls. Vergleichsbilder entstehen nur mit Hilfe von Störlicht. Bei dem Störlicht kann es sich beispielsweise um Sonnenlicht oder um Licht einer künstlichen Lichtquelle, z. B. Garagenlicht, handeln. Zum Entstehen der Vergleichsbilder emittiert das Lichtmodul kein Licht. Die Überwachungseinheit kann durch Vergleich eines Erkennungsbildes und eines Vergleichsbildes das Störlicht erkennen. Das optische Sensorsystem, insbesondere die Überwachungseinheit, kann hierdurch ein modifiziertes Erkennungsbild generieren, aus dem das Störlicht entfernt ist. Es kann vorgesehen sein, dass jeweils nach einer vorgegebenen Anzahl von Erkennungsbildern ein Vergleichsbild aufgenommen wird.

Es kann sein, dass weitere Maßnahmen getroffen werden, damit der Benutzer das Kraftfahrzeug gefahrlos öffnen kann.

So ist es bei einem erfindungsgemäßen Verfahren vorgesehen, dass der Betätigungsbereich nur eine vorgegebene Betätigungsdauer t_{B} lang überwacht wird. Eine maximale Länge der Betätigungsdauer t_{B} kann fest vorgegeben und in dem optischen Sensorsystem gespeichert sein. Abstände von Objekten, die sich außerhalb der Betätigungsdauer t_{B} im Betätigungsbereich aufhalten, werden nicht erfasst. Somit kann außerhalb der Betätigungsdauer t_{B} kein Arbeitssignal ausgelöst werden. Durch die Betätigungsdauer kann nur in einem beschränkten Zeitraum ein Arbeitssignal ausgelöst werden, so dass die Gefahr von Fehlauslösungen verringert wird.

Vorzugsweise kann nur bei Erfüllung mindestens einer weiteren Vorgabe das Arbeitssignal bereitgestellt werden. Hierdurch wird ebenfalls die Sicherheit für den Benutzer erhöht.

So kann während der Überwachung zusätzlich zu Schritt b) die Größe des Objekts bestimmt werden. Nur wenn die Größe eine Mindestgröße überschreitet und/oder eine maximale Größe unterschreitet, kann das Arbeitssignal bereitgestellt werden.

Alternativ oder zusätzlich kann ein definierter Bewegungsablauf des Objekts im Betätigungsbereich vorgegeben sein. Nur wenn der definierte Bewegungsablauf erfolgt, wird das Arbeitssignal bereitgestellt. Bei dem definierten Bewegungsablauf kann es sich z. B. um eine vorgegebene Gestik handeln. Es kann sein, dass mehrere Messungen des Abstands des Objekts zum optischen Sensor durchgeführt werden, um den Bewegungsablauf im Betätigungsbereich erkennen zu können. Hierbei wird insbesondere der Abstand bei zumindest zwei aufeinanderfolgenden Bildern, insbesondere Erkennungsbildern, erfasst. Der Abstand kann durch eine Time of Flight Messung erfasst werden.

Denkbar ist, dass während der Überwachung die Aufenthaltsdauer des Objekts im Betätigungsbereich erfasst wird. Nur wenn die Aufenthaltsdauer eine Mindestaufenthaltsdauer überschreitet und/oder eine maximale Aufenthaltsdauer unterschreitet, kann das Arbeitssignal bereitgestellt werden.

Ebenfalls ist es möglich, dass ein Entfernen des Objekts innerhalb einer vorgegebenen Entfernungsdauer t_{E} aus dem Betätigungsbereich erfolgen muss, damit das Arbeitssignal bereitgestellt wird. So kann es vorgesehen sein, dass, wenn als Resultat des Schritts d) die Vorgabe erfüllt ist, die Entfernungsdauer t_{E} beginnt. Der Beginn der Entfernungsdauer t_{E} ist für den Benutzer wahrnehmbar. Nur wenn das Objekt, insbesondere ein Körperteil des Benutzers, innerhalb der Entfernungsdauer t_{E} aus dem Betätigungsbereich entfernt wird, wird das Arbeitssignal bereitgestellt.

Eine weitere Möglichkeit, die Sicherheit des Benutzers zu erhöhen, kann durch ein Warnsignal erreicht werden. So kann vor dem Auslösen des Arbeitssignals ein für den Benutzer wahrnehmbares Warnsignal abgegeben werden.

Ebenfalls wird die Aufgabe durch ein erfindungsgemäßes Authentifizierungssystem mit einem Montagemodul, einem ID-Geber und einem Zugangskontrollsystem gelöst.

Ein Montagemodul für ein Kraftfahrzeug, mit einem optischen Sensorsystem, ist geeignet
a) ein Signal, dass ein berechtigter Benutzer authentifiziert ist, zu erhalten,
b) einen außerhalb des Kraftfahrzeuges liegenden Betätigungsbereich zu überwachen,
c) einen Abstand eines Objektes im Betätigungsbereich zu einem optischen Sensor des Sensorsystems zu erfassen,
d) den Abstand mit einer Vorgabe zu vergleichen,
e) ein Arbeitssignal bei Erfüllen der Vorgabe bereitzustellen.

Insbesondere ist das Montagemodul und/oder das Authentifizierungssystem geeignet, ein erfindungsgemäßes Verfahren auszuführen. Hierzu kann insbesondere das optische Sensorsystem eine Überwachungseinheit mit einem Prozessor und einem Speicher aufweisen, mit dessen Hilfe das erfindungsgemäße Verfahren ausführbar ist. Das erfindungsgemäße Verfahren kann in dem Speicher hinterlegt sein. Bei einem erfindungsgemäßen Authentifizierungssystem ist die optische Überwachungseinheit dazu ausgebildet, Bilder auszuwerten, die vom optischen Sensor aufgenommen worden sind.

Ferner weist das optische Sensorsystem den optischen Sensor auf, um Licht aus dem Betätigungsbereich zu empfangen. Der optische Sensor nimmt Bilder des Betätigungsbereichs auf.

Das optische Sensorsystem weist ein Lichtmodul zum Emittieren von Licht auf. Das Licht dient dazu, den Betätigungsbereich entstehen zu lassen. Es kann vorgesehen sein, dass das Lichtmodul Licht im nicht sichtbaren Bereich emittiert.

Das Montagemodul kann ein Anzeigeelement aufweisen, durch das sichtbares Licht emittierbar ist. Hierdurch kann zumindest ein Teil des Betätigungsbereichs für den Benutzer sichtbar gemacht werden. Insbesondere kann eine auf der Bodenfläche liegende Endfläche des Betätigungsbereichs sichtbar gemacht werden. Bei einem erfindungsgemäßen Authentifizierungssystem macht das Anzeigeelement die Betätigungsdauer für den Benutzer sichtbar. So ist es denkbar, dass zu Beginn der Betätigungsdauer das Anzeigeelement angeschaltet wird. Hierbei kann das Anzeigeelement einen ersten Beleuchtungszustand einnehmen. Endet die Betätigungsdauer, so kann das Anzeigeelement ausgeschaltet werden.

Es ist möglich, dass der Bildsensor Pixel aufweist. Vorzugsweise wird der Betätigungsbereich mit nur einer geringen Anzahl von Pixeln auf dem Bildsensor dargestellt. Hierdurch können Produktions- und Betriebskosten gesenkt werden. So kann der Körperteil des Benutzers, insbesondere eine Hand oder ein Fuß, im Betätigungsbereich und/oder der Betätigungsbereich mit n Pixeln dargestellt werden, wobei insbesondere 2 ≤ n ≤ 10, bevorzugt n=2 beträgt. Vorzugsweise ist der Körperteil des Benutzers an jeder Stelle des Betätigungsbereichs zumindest mit der genannten Pixelanzahl darstellbar. Der Körperteil des Benutzers wird mit einer Pixelzahl größer 1 dargestellt, um das erfindungsgemäße Verfahren nicht durch einen fehlerhaften Pixel zu gefährden.

Zusätzlich kann das optische Sensorsystem geeignet sein, vor der Authentifizierung einen außerhalb des Kraftfahrzeugs liegenden Detektionsbereich zu überwachen und im Falle eines Erkennens des Benutzers im Detektionsbereich ein Signal für den Start einer Authentifizierungsüberprüfung zwischen einem ID-Geber und einem Zugangskontrollsystem des Kraftfahrzeuges auszulösen.

Der optische Sensor und/oder das Lichtmodul können dazu ausgebildet sein, sowohl zur Überwachung des Detektionsbereichs als auch zum Überwachen des Betätigungsbereichs eingesetzt zu werden. D. h., derselbe optische Sensor und/oder dasselbe Lichtmodul dienen zur Überwachung des Detektions- und des Betätigungsbereichs. Hierzu können der optische Sensor und/oder das Lichtmodul ein starres Linsensystem aufweisen.

Weitere, die Erfindung verbessernde Maßnahmen ergeben sich aus der nachfolgenden Beschreibung zu den Ausführungsbeispielen der Erfindung, welche in den Figuren schematisch dargestellt sind. Es zeigen:
- Fig. 1: ein erstes Montagemodul und ein erstes erfindungsgemäßes Authentifizierungssystem,
- Fig. 2 bis Fig. 4: das Montagemodul und das Authentifizierungssystem aus Figur 1 in einer jeweils anderen Umgebung,
- Fig. 5: eine Draufsicht auf einen Ausschnitt aus Figur 1,
- Fig. 6: eine weitere Darstellung des Montagemoduls und des Authentifizierungssystems aus Figur 1,
- Fig. 7: ein zweites Montagemodul und ein zweites erfindungsgemäßes Authentifizierungssystem,
- Fig. 8: ein drittes Montagemodul und ein drittes erfindungsgemäßes Authentifizierungssystem,
- Fig. 9: ein viertes Montagemodul und ein viertes erfindungsgemäßes Authentifizierungssystem,
- Fig. 10: eine Draufsicht auf das Montagemodul aus Figur 8,
- Fig. 11: eine Ansicht auf einen Bildsensor aus Figur 10,
- Fig. 12: eine Darstellung der Strahlungsintensität über der Zeit und
- Fig. 13: ein erfindungsgemäßes Verfahren.

Elemente mit gleicher Funktion und Wirkungsweise sind in den Figuren mit denselben Bezugszeichen bezeichnet.

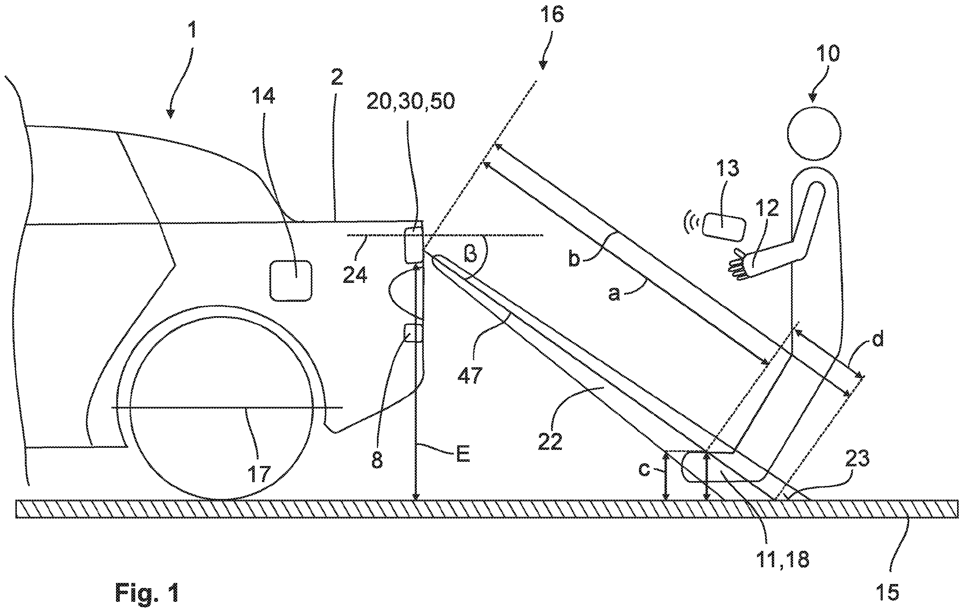

In Figur 1 ist ein Montagemodul 20 und ein erfindungsgemäßes Authentifizierungssystem 16 bei einem Kraftfahrzeug 1 eingesetzt worden. Hierbei ist der Einsatz in einem Heckbereich des Kraftfahrzeuges 1 mit einer Heckklappe 2 dargestellt. Ein optisches Sensorsystem 30 des Montagemoduls 20 ist im Bereich der Heckklappe 2, z. B. in einer Griffleiste der Heckklappe 2, angeordnet. Durch das optische Sensorsystem 30 wird ein außerhalb des Kraftfahrzeuges 1 liegender Betätigungsbereich 22 erzeugt. Das optische Sensorsystem 30 überwacht nach einer erfolgreichen Authentifizierungsüberprüfung den Betätigungsbereich 22. Zum Start der Überwachung erhält das optische Sensorsystem 30 ein Signal von einem Zugangskontrollsystem 14, dass ein berechtigter Benutzer authentifiziert ist. Hierzu hatte zuvor das Zugangskontrollsystem 14 ein Wecksignal an einen ID-Geber 13 und der ID-Geber 13 einen Authentifizierungscode an das Zugangskontrollsystem 14 gesendet.

Der Betätigungsbereich 22 erstreckt sich, einen schrägen Kegelstumpf aufweisend, von einer Nähe zum optischen Sensorsystem 30 zu einer Bodenfläche 15, auf der das Kraftfahrzeug 1 steht. An der Bodenfläche 15 endet der Betätigungsbereich 22 mit einer Endfläche 23. Der Betätigungsbereich 22 hat einen Neigungswinkel β zu einer Ebene 24, die parallel zur Bodenfläche 15 und/oder zu einer Ebene 17, die parallel zu einer die Fahrzeugachsen verbindenden Ebene verläuft.

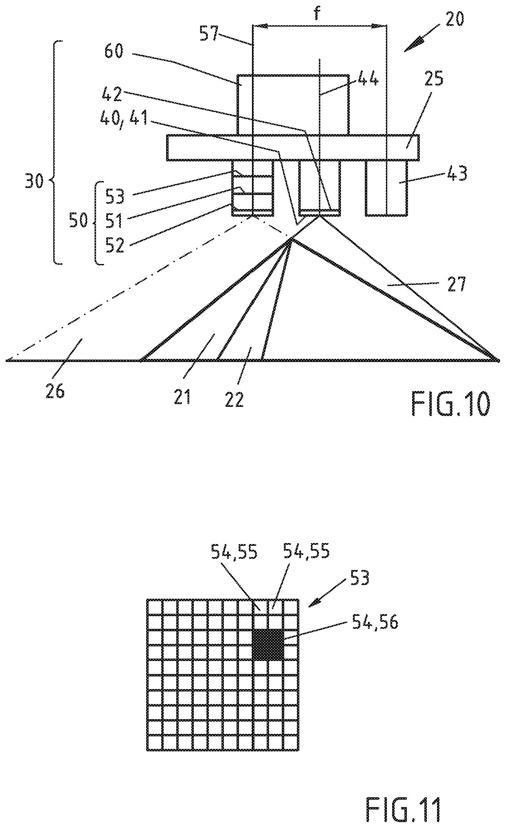

Befindet sich ein Objekt 18, in diesem Fall ein Fuß 11 eines Benutzers 10, in dem Betätigungsbereich 22, so wird der Abstand a des Objekts 18 zu einem optischen Sensor 50 des optischen Sensorsystems 30 erfasst. Hierzu sendet ein Lichtmodul 40 des optischen Sensorsystems 30 gepulstes, infrarotes Licht aus. Das Licht des Lichtmoduls wird am Objekt 18 reflektiert und von dem optischen Sensor 50 empfangen. In Figur 1 ist ein Lichtstrahl 47, der von einem Punkt des Objekts 18 oder der Endfläche 23 reflektiert und von einem Pixel 54 des optischen Sensors 50 empfangen wird, dargestellt. Der optische Sensor 50 wird von einer Überwachungseinheit 60 des optischen Sensorsystems 30 ausgewertet. Um den Abstand a zu bestimmen, kann eine Time-of-Flight Messung durchgeführt werden. Der optische Sensor 50, das Lichtmodul 40 und die Überwachungseinheit 60 sind in Figur 10 dargestellt.

Die Überwachungseinheit 60 vergleicht den erfassten Abstand a mit einer Vorgabe. Die Überwachungseinheit 60 stellt ein Arbeitssignal zum Öffnen der Heckklappe 2 nur bereit, wenn die Vorgabe erfüllt ist. Hierdurch ist eine Bedingung für das Bereitstellen des Arbeitssignals geschaffen worden, so dass nicht jedes Objekt 18 im Betätigungsbereich 22 das Arbeitssignal auslöst. Vielmehr muss ein Benutzerwille da sein, der das Objekt 18 so in den Betätigungsbereich 22 hält, dass die Vorgabe erfüllt wird und das Arbeitssignal bereitgestellt wird. Somit ist die Sicherheit für den Benutzer 10 erhöht. Hierbei ist vorgesehen, dass der Benutzer 10 seinen Fuß 11 in den Betätigungsbereich 22 bewegt, um seinen Benutzerwillen anzuzeigen. Beim Öffnen der Heckklappe 2 bewegt sich die Heckklappe 2 aus einem Türschloss 8.

In der Figur 1 sind verschiedene Möglichkeiten dargestellt, welche Vorgabe erfüllt sein kann. In einer ersten Möglichkeit der Vorgabe kann der Abstand a direkt mit einem in der Überwachungseinheit 60 hinterlegten Mindestabstand verglichen werden. Nur wenn der Abstand a den Mindestabstand überschreitet, wird die Vorgabe erfüllt.

In einer zweiten Möglichkeit der Vorgabe kann zunächst der Abstand b der Endfläche 23 zum optischen Sensor 50 erfasst werden, solange sich noch kein Objekt 18 in dem Betätigungsbereich 22 befindet. Ein Verhältnis des Abstands a zum Abstand b wird gebildet und der Wert dieses Verhältnisses mit einem in der Überwachungseinheit hinterlegten Mindestwert verglichen. Nur wenn der Wert des Verhältnisses des Abstands a zum Abstand b den Mindestwert überschreitet, wird die Vorgabe erfüllt.

In einer dritten Möglichkeit der Vorgabe kann die Differenz d der Abstände a und b gebildet werden. Durch die Differenz d wird eine Entfernung einer dem optischen Sensor 50 zugewandten Oberfläche 31 des Objekts 18 zur Endfläche 23 bezeichnet. Nur wenn die Differenz d eine maximalen Entfernung unterschreitet, wird die Vorgabe erfüllt. Alternativ kann in einer vierten Möglichkeit der Vorgabe aus den Abständen a und b und dem Neigungswinkel β der Abstand c, der den Abstand einer dem optischen Sensor zugewandten Oberfläche zu der Endfläche 23 beschreibt, gebildet werden. Nur wenn der Abstand c einen maximalen Wert unterschreitet, wird die Vorgabe erfüllt.

Durch die oben genannten Vorgaben wird jeweils eine Mindestabstandsbedingung formuliert, durch die das Objekt dem optischen Sensor nicht zu nahe kommen darf. Somit löst ein Benutzer, der dem Kraftfahrzeug 1 zu nahe kommt, oder ein Hund 19 im Betätigungsbereich 22 das Arbeitssignal nicht aus.

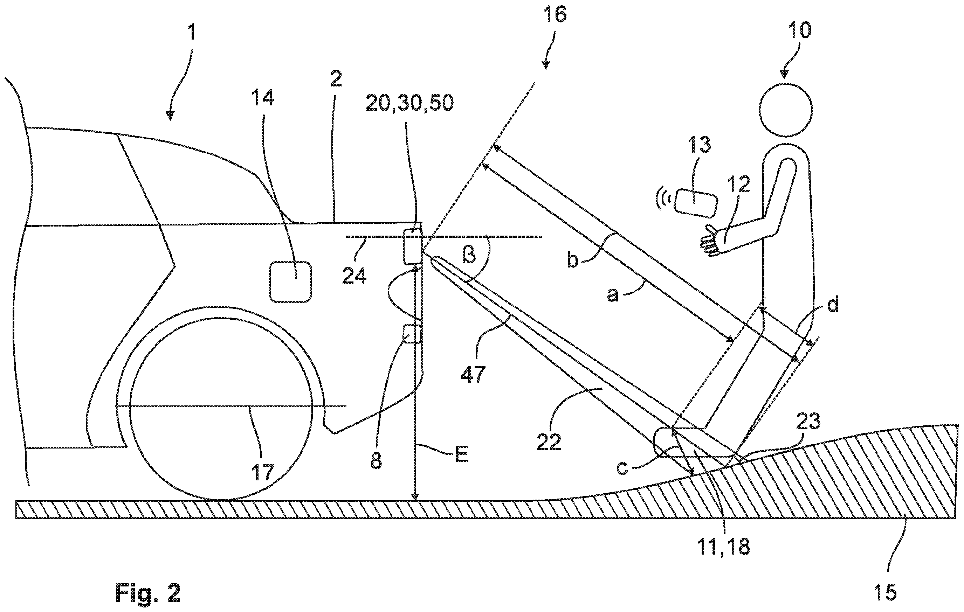

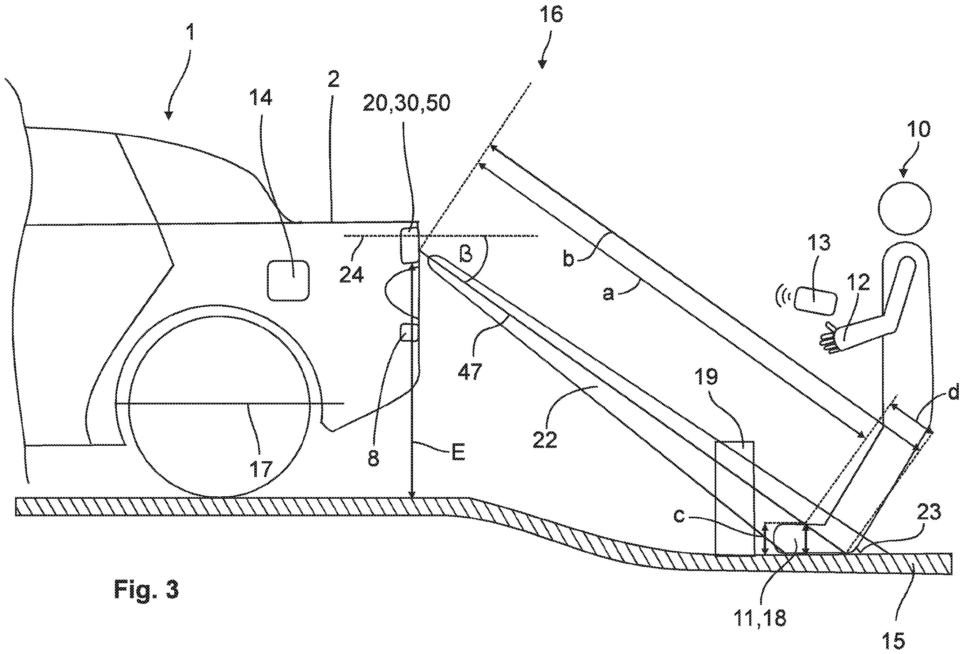

Während die erste Möglichkeit der Vorgabe keine Erfassung des Abstandes b benötigt und somit besonders einfach ist, wird durch die anderen Möglichkeiten der Vorgabe auch eine hügelige Bodenfläche 15 berücksichtigt. In Figur 2 ist dargestellt, wie die Bodenfläche 15 hinter dem Kraftfahrzeug 1 ansteigt. in Figur 3 senkt sich die Bodenfläche 15 hinter dem Kraftfahrzeug 1 ab. Dieses kann bei Garagenauffahrten häufig anzutreffen sein. In Figur 2 kann bei gleicher Höhe des Fußes 11 über der Bodenfläche 15 die erste Möglichkeit der Vorgabe nicht mehr erfüllt sein, während die zweite bis vierte Möglichkeit der Vorgabe erfüllt sind. In Figur 3 kann hingegen der Fuß 11 alle Möglichkeiten der Vorgabe erfüllen. Bei der zweiten bis vierten Möglichkeit der Vorgabe wird im Gegensatz zur ersten Vorgabe jedoch vermieden, dass ein Hund 19 die Vorgabe erfüllt.

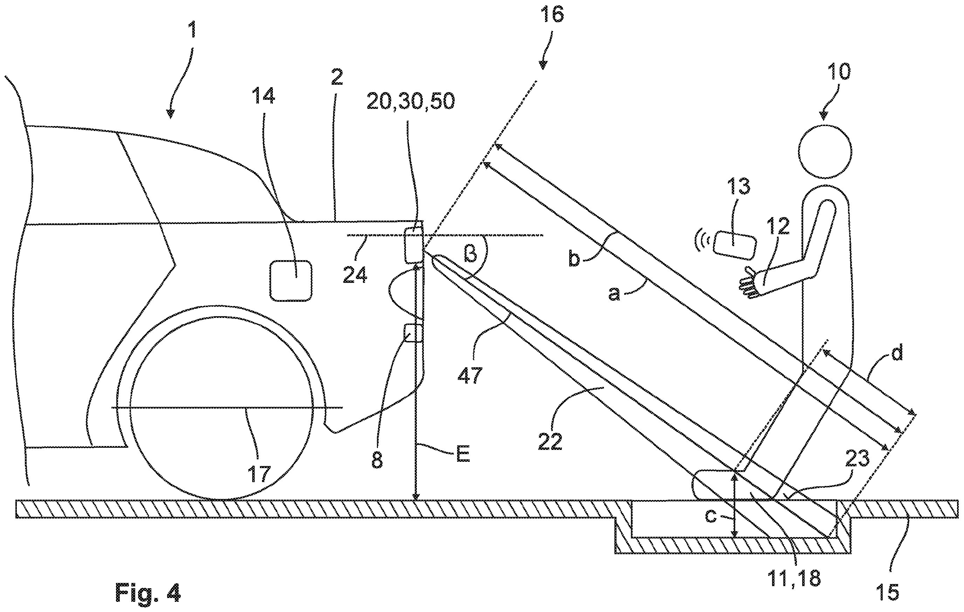

Generell wird davon ausgegangen, dass der Benutzer 10 auf die Endfläche 23 treten soll, um das Arbeitssignal auszulösen. Die Mindestabstandsbedingung kann aber so formuliert werden, dass der Benutzer bei einer Pfütze, wie in Figur 4 dargestellt, den Fuß über die Endfläche 23 halten und dennoch die Mindestabstandsbedingung erfüllen kann. So kann z. B. für den maximalen Abstand des Abstands c ein Wert von 30 cm gewählt werden. Entsprechende andere Mindestabstandsbedingungen sind entsprechend der Einbauhöhe E und/oder des Neigungswinkels β denkbar.

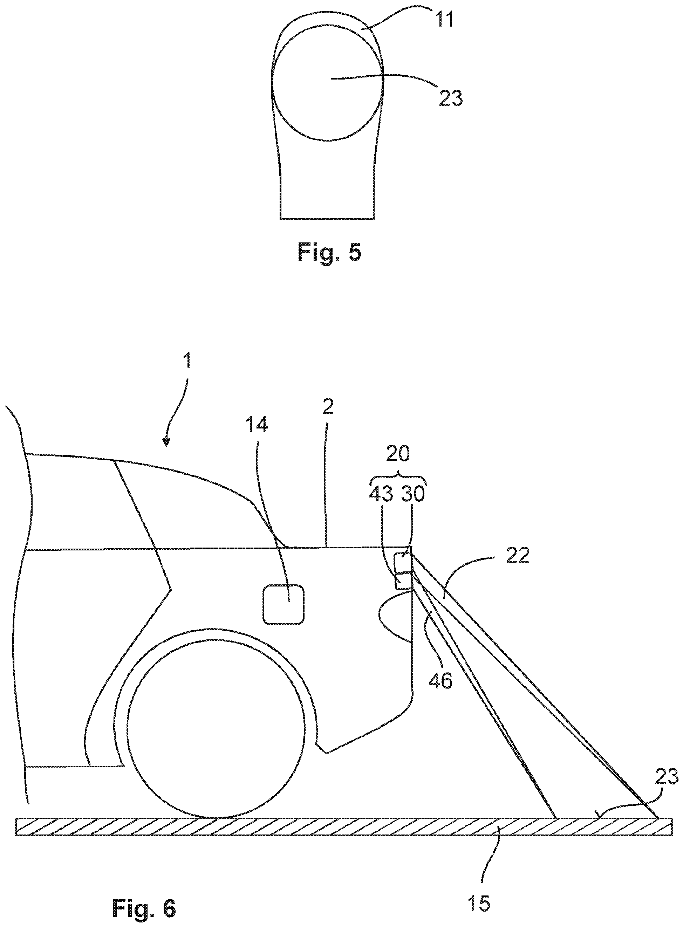

In Figur 5 ist die Größe der Endfläche 23 im Vergleich zu dem Fuß 11 dargestellt. Die Endfläche 23 hat geringere räumliche Ausmaße als der Fuß 11, so dass leicht ein aussagekräftiger mittlerer Abstand a des Fußes 11 zum optischen Sensor 50 erfasst werden kann.

In Figur 6 ist ein Anzeigeelement 43 des Montagemoduls 20 dargestellt. Dieses Anzeigeelement 43 ist auch in dem Montagemodul 20 der Figuren 1 bis 4 vorhanden, jedoch der Übersichtlichkeit wegen in den Figuren 1 bis 4 nicht dargestellt. Das Anzeigeelement 43 dient dazu, die Endfläche 23 des Betätigungsbereichs 22 für den Benutzer 10 sichtbar zu machen. Hierzu emittiert das Anzeigeelement 43 sichtbares Licht 46. Das Anzeigeelement 43 ist nahe am optischen Sensorsystem 30 angeordnet. Hierdurch ist es möglich, dass der vom Anzeigeelement 43 beleuchtete Bereich der Bodenfläche 15 auch dann mit dem Endbereich 23 genügend deckungsgleich ist, wenn die Bodenfläche 15 uneben ist.

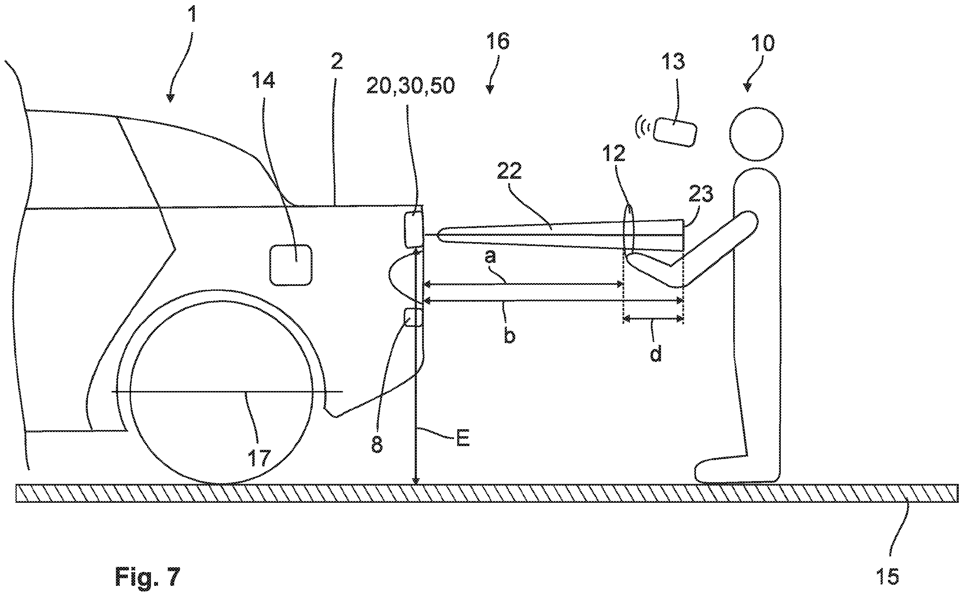

In Figur 7 ist ein zweites Montagemodul 20 dargestellt. Der Betätigungsbereich 22 endet hierbei vollständig über der Bodenfläche 15. Es ist vorgesehen, dass der berechtigte Benutzer 10 mit seiner Hand 12 so in den Betätigungsbereich 22 fasst, dass die Hand 12 die Mindestabstandsbedingung erfüllt und das Arbeitssignal bereitgestellt wird. Hierbei sind die erste bis dritte Möglichkeiten für eine Mindestabstandsbedingung denkbar. Die Endfläche des Betätigungsbereichs 22 ist durch die nachlassende Intensität des vom Lichtmodul 40 emittierten Lichts gegeben. Das Anzeigeelement macht nicht die Endfläche 23 des Betätigungsbereichs 22 sichtbar, sondern zeigt durch das Emittieren von sichtbarem Licht eine Betätigungsdauer t_{B} an, in der ein Objekt im Betätigungsbereich 22, das die Mindestabstandsbedingung erfüllt, das Arbeitssignal auslösen kann.

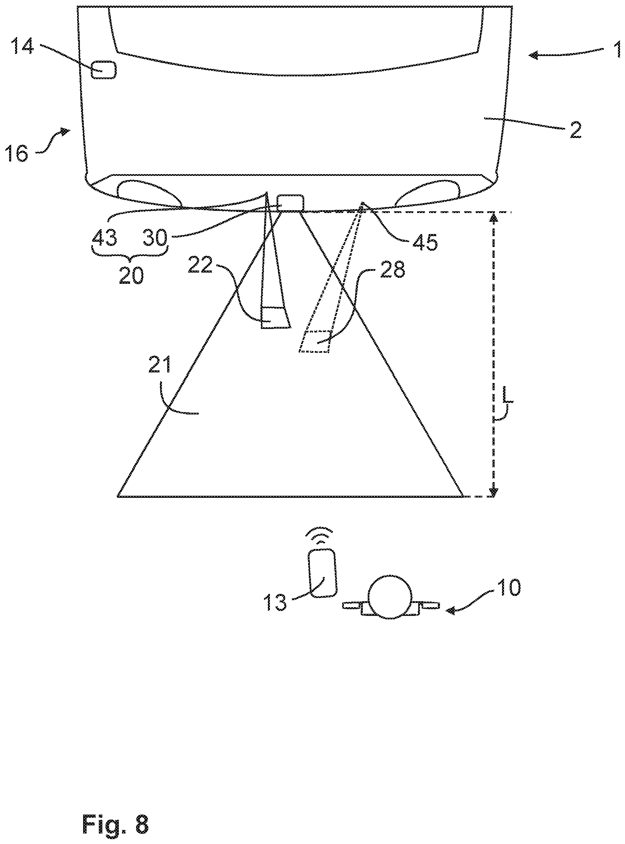

Figur 8 zeigt ein drittes Ausführungsbeispiel für ein Montagemodul 20 und ein erfindungsgemäßes Authentifizierungssystem 16. In Bezug auf die Anordnung des Montagemoduls 20 im Heckbereich und in Bezug auf die Funktion des Betätigungsbereichs 22 gelten die zu den Figuren 1 bis 6 gemachten Ausführungen. Das optische Sensorsystem 30 des Montagemoduls 20 der Figur 8 ist in der Lage, einen Detektionsbereich 21 zu überwachen. Der Detektionsbereich 21 wird von einem Abstellen des Kraftfahrzeuges 1 bis zu einer erfolgreichen Authentifizierung überwacht. Hierbei kann ein Benutzer 10 in dem Detektionsbereich 21 von dem optischen Sensorsystem 30 erkannt werden. Im Falle eines Erkennens des Benutzers 10 wird ein Signal zum Start einer Authentifizierungsüberprüfung ausgelöst. Die Authentifizierungsüberprüfung wird von dem Zugangskontrollsystem 14 und dem ID-Geber 13 selbstständig durchgeführt. Hierbei muss der Benutzer 10 nicht den ID-Geber 13 bedienen, so dass es sich um eine Passive-Entry-Überprüfung handelt. Bei einer erfolgreichen Authentifizierung erhält das optische Sensorsystem 30 ein Signal, dass der Benutzer erfolgreich authentifiziert ist. Hieraufhin überwacht das optische Sensorsystem 30 den Betätigungsbereich 22.

Der Detektionsbereich hat die Länge L. Der Betätigungsbereich 22 ist von geringeren räumlichen Ausmaßen als der Detektionsbereich 21 und liegt innerhalb des Detektionsbereichs 21. Der Betätigungsbereich 22 endet näher am Kraftfahrzeug 1 als der Detektionsbereich 21. Somit kann der Benutzer 10 seine Bewegungsrichtung beibehalten, wobei der Benutzer 10 zunächst authentifiziert wird. Dann kann der Benutzer 10 den Fuß 11 in den Betätigungsbereich 22 bewegen kann.

Es kann sein, dass der Betätigungsbereich 22 der einzige Betätigungsbereich ist. Optional und daher in Figur 1 gestrichelt dargestellt, ist zusätzlich ein zweiter Betätigungsbereich 28 dargestellt. In diesem Fall muss in beiden Betätigungsbereichen 22, 28 innerhalb einer vordefinierten Betätigungsdauer t_{B} ein Objekt 18 die Mindestabstandsbedingung erfüllen, um das Arbeitssignal bereitzustellen. Zum Sichtbarmachen des zweiten Betätigungsbereichs 28 dient ein zweites Anzeigeelement 45 des Montagemoduls 20.

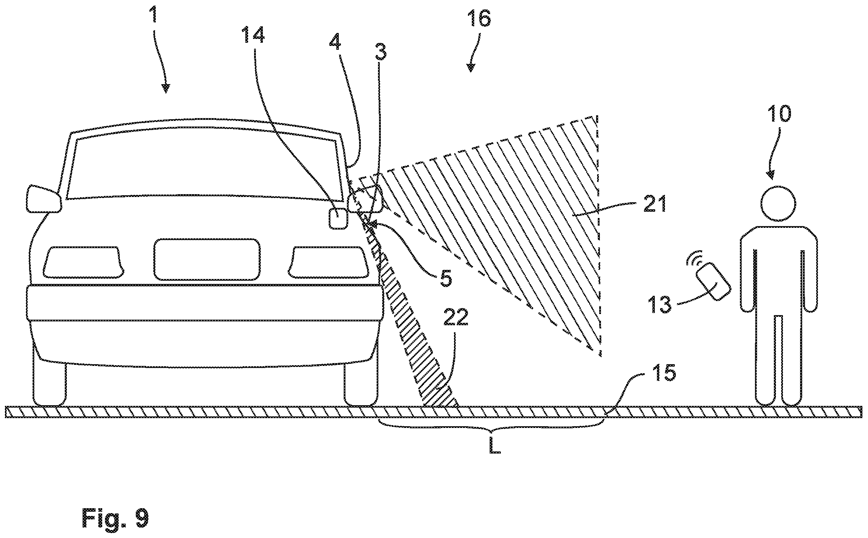

Figur 9 zeigt ein viertes Ausführungsbeispiel, wie das Montagemodul 20 und das erfindungsgemäße Authentifizierungssystem 16 eingesetzt werden. Das Montagemodul 20 ist in der Figur 9 in einer B-Säule 4 einer Fahrzeugseite angeordnet. Durch den Detektionsbereich 21 wird eine Annäherung an eine Seitentür 3 des Kraftfahrzeuges 1 überwacht. Das Arbeitssignal kann zum Öffnen der Seitentür 3 dienen. Der Betätigungsbereich 22 endet näher am Kraftfahrzeug 1 als der Detektionsbereich 21. Der Betätigungsbereich 22 liegt außerhalb des Detektionsbereichs 21. Der Betätigungsbereich 22 des Ausführungsbeispiels der Figur 9 umfasst den Bereich des Türgriffes 5. Im Betätigungsbereich 22 erfüllt insbesondere eine Hand 12 des Benutzers 10, die sich in der Nähe des Türgriffs 5 befindet, die Mindestabstandsbedingung.

In der Figur 10 ist das dritte Ausführungsbeispiel eines Montagemoduls 20 in einer Draufsicht dargestellt. Das Montagemodul 20 weist eine Installationsplatte 25 als ein Befestigungselement, ein optisches Sensorsystem 30 und ein Anzeigeelement 43 auf.

Das optische Sensorsystem 30 weist ein Lichtmodul 40 auf, das in Figur 10 als eine einzige Lichtquelle 41 ausgebildet ist. Die Lichtquelle 41 emittiert Infrarotlicht, wodurch ein Sendebereich 27 entsteht. Form und Gestalt des Sendebereiches 27 wird durch ein Linsensystem 42 der Lichtquelle 41, das nur schematisch dargestellt ist, erreicht. Das optische Sensorsystem 30 weist zudem einen optischen Sensor 50 auf, der aus einem Empfangsbereich 26 Licht empfangen kann. Form und Gestalt des Empfangsbereiches 26 wird durch ein schematisch dargestelltes Linsensystem 51 des optischen Sensors 50 vorgegeben. Der mit dicker Strichdicke dargestellte Detektionsbereich 21 ergibt sich durch die Überlagerung des Sendebereiches 27 mit dem Detektionsbereich 26. Der optische Sensor 50 weist einen Infrarotfilter 52 auf, um Licht anderer Wellenlängen zu filtern. Ferner weist der optische Sensor einen Bildsensor 53 auf, auf dem das Bild entsteht. Eine Überwachungseinheit 60 dient zur Auswertung des optischen Sensors 50. Der optische Sensor 50, das Lichtmodul 40 und die Überwachungseinheit 60 sind auf der Installationsplatte 25 befestigt. Die Linsensysteme 42, 51 sind starr.

Der Betätigungsbereich 22 liegt innerhalb des Detektionsbereichs 21. Dieses entspricht dem dritten Ausführungsbeispiel. Alternativ können in dem Bereich der Überlagerung des Sende- und Empfangsbereichs der Detektionsbereich 21 und der Betätigungsbereich 22 separat ausgebildet sein, so dass der Detektions- und der Betätigungsbereich 21, 22 wie in Figur 9 angeordnet sind. Das Anzeigeelement 43 weist einen geringen Abstand f zum optischen Sensor 50 auf.

Figur 11 zeigt eine Draufsicht auf einen Bildsensor 53 eines Montagemoduls 20, der eine Gesamtzahl an Pixel 54 aufweist. Dadurch, dass mit demselben Bildsensor 53 auch der Detektionsbereich 21 überwacht wird, werden nur wenige Pixel 54, insbesondere zwischen zwei und zehn Pixel 54 verwendet, um den Betätigungsbereich 22 auf dem Bildsensor 53 abzubilden. Beispielhaft bilden in Figur 11 vier Pixel 54 den Betätigungsbereich 22 ab. Während der Überwachung des Betätigungsbereichs 22 werden nur die dem Betätigungsbereich 22 zugeordneten Pixel 56 ausgewertet. Die übrigen Pixel entsprechen nicht ausgewerteten Pixeln 55.

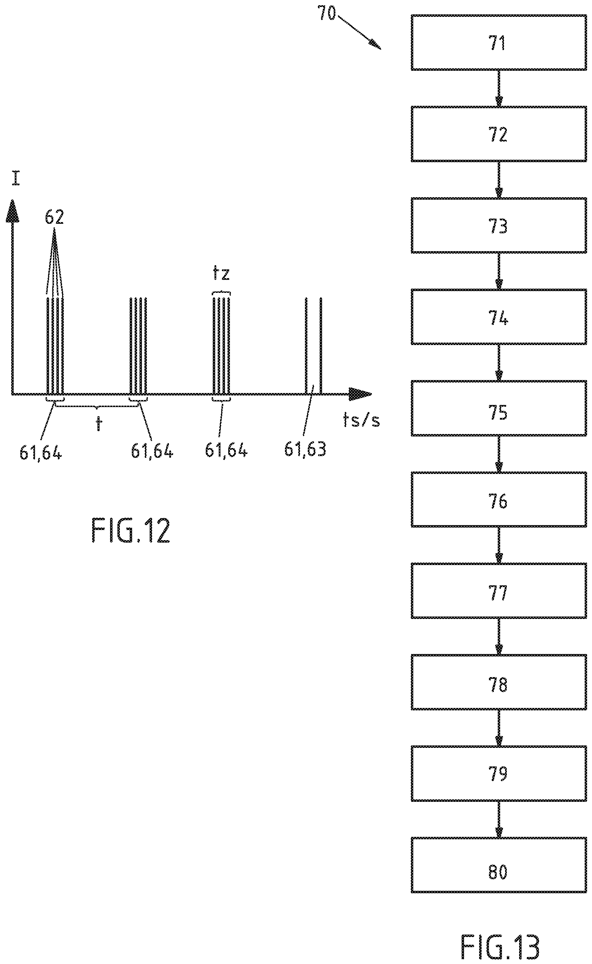

Figur 12 enthält eine Auftragung einer Lichtintensität I über der Zeit ts. Wie in Figur 12 dargestellt, wird mit Hilfe des Bildsensors 53 nach jeder Zeitspanne t ein Bild 61 aufgenommen, wobei in der Figur 12 jeweils ein Zeitintervall tz dargestellt ist, das für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Erkennungsbild 64 zu erzeugen. Die Lichtpulse 62 werden mit einer vorgegebenen Pulsfrequenz von dem Lichtmodul 40 emittiert. Das von dem Bildsensor 53 empfangene Licht der Lichtpulse 62 eines Bildes 61 wird aufintegriert oder aufsummiert, um das Erkennungsbild 64 zu erzeugen. Um eine Abstandserfassung durchzuführen, gibt das optische Sensorsystem 30 das Zeitintervall tz vor, in dem die Lichtpulse 62 ein Erkennungsbild 64 erzeugen. Der Abstand des Benutzers 10 zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 53 erreichen. Hierzu emittiert das Lichtmodul 40 kein Licht.

In Figur 13 ist ein erfindungsgemäßes Verfahren dargestellt. Zunächst überwacht in einem ersten Schritt 71 das optische Sensorsystem 30 den Detektionsbereich 21. Befindet sich ein Benutzer 10 im Detektionsbereich 21 und erfüllt der Benutzer 10 die vorgegebenen Kriterien, so wird der Benutzer 10 erkannt. In diesem Fall wird in einem zweiten Schritt 72 ein Signal für die Authentifizierungsüberprüfung ausgelöst. In einem dritten Schritt 73 wird die Authentifizierungsüberprüfung durchgeführt. Hierbei wird durch das im Schritt 72 ausgelöste Signal das Zugangskontrollsystem 14 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heckklappe 2 oder die Seitentür 3.

Nach der erfolgreichen Authentifizierung wird in einem vierten Schritt 74 ein Signal, dass der Benutzer 10 authentifiziert wurde, von dem optischen Sensorsystem 30 empfangen. In einem fünften Schritt 75 wird begonnen, den Betätigungsbereich 22 zu überwachen. Hierzu wird eine Betätigungsdauer gestartet. Ebenfalls beginnt das Anzeigeelement 43 sichtbares Licht in einem ersten Beleuchtungszustand zu emittieren, so dass dem Benutzer 10 die Endfläche 23 des Betätigungsbereichs 22 sichtbar gemacht wird. Zugleich sendet das Lichtmodul 40 gepulstes infrarotes Licht aus, um Abstandsmessungen durchführen zu können. Der optische Sensor 50 empfängt das Licht des Lichtmoduls 40, wodurch ein Erkennungsbild 64 entsteht. Zusätzlich werden Vergleichsbilder 63 aufgenommen und ausgewertet. Die Überwachungseinheit 60 wertet die erhaltenen Bilder 61 aus. Hierbei kann zunächst der Abstand b erfasst und gespeichert werden. Befindet sich ein Objekt 18 in dem Betätigungsbereich 22, so wird in einem Schritt 76 der Abstand a des Objekts 18 zum optischen Sensor 50 erfasst. Zumindest eine Mindestabstandsbedingung wird in einem Schritt 77 durch die Überwachungseinheit 60 überprüft. So kann z. B. der Abstand a mit dem in der Überwachungseinheit hinterlegten Mindestabstand verglichen werden und/oder die Differenz der Abstände b und a mit einer maximalen Entfernung. Nur wenn die Mindestabstandsbedingung erfüllt ist, wird in einem nächsten Schritt 78 das Anzeigeelement 43 in einen zweiten Beleuchtungszustand versetzt, in dem das Licht des Anzeigeelementes 43 periodisch seine Helligkeit ändert und somit blinkt. Zugleich wird eine Entfernungsdauer t_{E} gestartet. Wird das Objekt 18 innerhalb der Entfernungsdauer t_{E} aus dem Betätigungsbereich 22 entfernt, so wird in einem Schritt 79 die Überwachung des Betätigungsbereichs 22 beendet und das Anzeigeelement 43 in einen dritten Beleuchtungszustand versetzt, in dem das Anzeigeelement 43 ein Warnsignal an den Benutzer 10 bereitstellt. Danach wird nach einem fest vorgegebenen Zeitintervall in einem Schritt 80 das Arbeitssignal zum Öffnen der Heckklappe 2 bereitgestellt und das Anzeigeelement 43 ausgeschaltet.

Wird in der Betätigungsdauer t_{B} kein Objekt 18 in dem Betätigungsbereich 22 ermittelt und/oder wird in Betätigungsdauer t_{B} die Mindestabstandsbedingung nicht erfüllt und/oder wird in der Entfernungsdauer t_{E} nicht das Objekt 18 aus dem Betätigungsbereich 22 entfernt, so wird nach Ende der Betätigungsdauer t_{B} die Überwachung des Betätigungsbereichs 22 eingestellt. Dieses wird dadurch angezeigt, dass das Anzeigeelement 43 kein Licht mehr emittiert.

Insbesondere die Schritte 71 bis 73 und 78 bis 79 sind optional. Insbesondere kann alternativ direkt nach dem Schritt 77 direkt das Arbeitssignal bereitgestellt werden. Der Schritt 74 entspricht dem Verfahrensschritt a, die Schritte 75 bis 78 entsprechen dem Verfahrensschritt b, der Schritt 76 dem Verfahrensschritt c, der Schritt 77 dem Verfahrensschritt d und der Schritt 80 enthält den Verfahrensschritt e.

### Bezugszeichenliste

- 1: Kraftfahrzeug
- 2: Heckklappe (bewegliches Teil)
- 3: Seitentür (bewegliches Teil)
- 4: B-Säule
- 5: Türgriff
- 8: Türschloss

- 10: Benutzer
- 11: Fuß
- 12: Hand
- 13: ID-Geber
- 14: Zugangskontrollsystem
- 15: Bodenfläche
- 16: Authentifizierungssystem
- 17: Ebene
- 18: Objekt
- 19: Hund

- 20: Montagemodul
- 21: Detektionsbereich
- 22: erster Betätigungsbereich
- 23: Endfläche
- 24: Ebene
- 25: Befestigungselement
- 26: Empfangsbereich
- 27: Sendebereich
- 28: zweiter Betätigungsbereich

- 30: Optisches Sensorsystem
- 31: Oberfläche von 11
- 40: Lichtmodul
- 41: Lichtquelle von 30
- 42: Linsensystem für 30
- 43: erstes Anzeigeelement
- 44: optische Achse von 41
- 45: zweites Anzeigeelement
- 46: Licht von 43
- 47: reflektierter Lichtstrahl

- 50: optischer Sensor
- 51: Linsensystem von 50
- 52: IR-Filter
- 53: Bildsensor
- 54: Pixel
- 55: nicht ausgewertete Pixel
- 56: ausgewertete Pixel
- 57: optische Achse von 50
- 60: Überwachungseinheit
- 61: Bild
- 62: Lichtpuls
- 63: Vergleichsbild
- 64: Erkennungsbild

- 70: Verfahren
- 71: Verfahrensschritt
- 72: Verfahrensschritt
- 73: Verfahrensschritt
- 74: Verfahrensschritt
- 75: Verfahrensschritt
- 76: Verfahrensschritt
- 77: Verfahrensschritt
- 78: Verfahrensschritt
- 79: Verfahrensschritt
- 80: Verfahrensschritt

- β: Neigungswinkel
- E: Einbauhöhe
- L: Länge von 21

- a: Abstand von 18 zu 50
- b: Abstand von 23 zu 50
- c: Abstand von 31 zu 23
- d: Entfernung von 31 zu 23
- f: Abstand von 43 zu 50

## Patentansprüche

1. Verfahren (70) zur Bereitstellung eines Arbeitssignals für ein Kraftfahrzeug (1),
mit folgenden Schritten:
a) Erhalt eines Signals, dass ein berechtigter Benutzer (10) authentifiziert ist,
b) Überwachung eines außerhalb des Kraftfahrzeugs (1) liegenden Betätigungsbereichs (22) durch ein optisches Sensorsystem (30),
c) Erfassung eines Abstandes (a) eines Objektes (18) im Betätigungsbereich (22) zu einem optischen Sensor (50) durch das optischen Sensorsystem (30),
d) Vergleich des Abstandes (a) mit einer Vorgabe durch das optische Sensorsystem (30),
e) Bereitstellen eines Arbeitssignals bei Erfüllung der Vorgabe,
**dadurch gekennzeichnet,**
**dass** der Betätigungsbereich (22) nur eine vorgegebene Betätigungsdauer (tB) lang überwacht wird.

2. Verfahren (70) nach Anspruch 1,
**dadurch gekennzeichnet,**
**dass** das Arbeitssignal ein Signal zum Entriegeln und/oder Verriegeln und/oder Öffnen und/oder Schließen eines beweglichen Teils (2, 3) des Kraftfahrzeuges (1) ist, wobei insbesondere das bewegliche Teil (2, 3) eine Heckklappe (2) oder eine Seitentür (3) und/oder eine Schiebetür ist.

3. Verfahren (70) nach Anspruch 1 oder 2,
**dadurch gekennzeichnet,**
**dass** die Vorgabe einer Mindestabstandsbedingung des Abstandes (a) des Objekts (18) zum optischen Sensor (50) entspricht.

4. Verfahren (70) nach einem der vorhergehenden Ansprüche,
**dadurch gekennzeichnet,**
**dass** die Vorgabe einem fest vorgegebenen und in dem optischen Sensorsystem (30) hinterlegten Mindestabstand des Objekts (18) zum optischen Sensor (50) entspricht.

5. Verfahren (70) nach einem der vorhergehenden Ansprüche,
**dadurch gekennzeichnet,**
**dass** die Vorgabe einem Mindestwert für ein Verhältnis des Abstands (a) des Objektes (18) zum optischen Sensor (50) zu einem Abstand (b) einer Endfläche (23) des Betätigungsbereichs (22) zum optischen Sensor (50) entspricht, wobei sich die Endfläche (23) insbesondere an einer Bodenfläche (15), auf der das Kraftfahrzeug (1) steht, befindet.

6. Verfahren (70) nach einem der vorhergehenden Ansprüche,
**dadurch gekennzeichnet,**
**dass** die Vorgabe einer fest vorgegebenen und in dem optischen Sensorsystem (30) hinterlegten maximalen Entfernung (d) einer dem optischen Sensor (50) zugewandten Oberfläche (31) des Objektes (18) zur Endfläche (23) des Betätigungsbereichs (22), die sich insbesondere an der Bodenfläche (15) befindet, entspricht.

7. Verfahren (70) nach einem der vorhergehenden Ansprüche,
**dadurch gekennzeichnet,**
**dass** das optische Sensorsystem (30) mehrere Lichtpulse (62) nacheinander emittiert, ein Zeitintervall (tz) zum Empfang der Lichtpulse (62) durch das optische Sensorsystem (30) vorgegeben ist und über die Intensität der in dem Zeitintervall (t_{Z}) empfangenen Lichtpulse (62) der Abstand (a) in Schritt c) erfasst wird.

8. Verfahren (70) nach einem der vorhergehenden Ansprüche,
**dadurch gekennzeichnet,**
**dass** im Schritt b) Erkennungsbilder (64), die mit Hilfe des reflektierten Lichts des Lichtmoduls (40) entstanden sind, und Vergleichsbilder (63), die ohne das reflektierte Licht des Lichtmoduls (40) mit Hilfe von Störlicht entstanden sind, aufgenommen und so ausgewertet werden, dass ein modifiziertes Erkennungsbild generiert wird, aus dem das Störlicht entfernt ist.

9. Verfahren (70) nach einem der vorhergehenden Ansprüche,
**dadurch gekennzeichnet,**
**dass** nur bei Erfüllung zumindest einer weiteren Vorgabe, insbesondere einer Größe des Objekts (18), einer Aufenthaltsdauer des Objekts (18) im Betätigungsbereich (22), eines definierten Bewegungsablaufs des Objekts (18) im Betätigungsbereich (22) und/oder eines Entfernen des Objekts (18) innerhalb einer vorgegebenen Entfernungsdauer (t_{E}) aus dem Betätigungsbereich (22) das Arbeitssignal bereitgestellt wird.

10. Verfahren (70) nach einem der vorhergehenden Ansprüche,
**dadurch gekennzeichnet,**
**dass** vor dem Auslösen des Arbeitssignals ein für den Benutzer (10) wahrnehmbares Warnsignal abgegeben wird.

11. Authentifizierungssystem (16) mit einem Zugangskontrollsystem (14), einem ID-Geber (13) und einem Montagemodul (20) für ein Kraftfahrzeug (1), mit
einem optischen Sensorsystem (30), das geeignet ist,
a) ein Signal, dass ein berechtigter Benutzer authentifiziert ist, zu erhalten,
b) einen außerhalb des Kraftfahrzeuges (1) liegenden Betätigungsbereich (22) zu überwachen,
c) einen Abstand (a) eines Objektes (18) im Betätigungsbereich (22) zu einem optischen Sensor (50) des Sensorsystems (30) zu erfassen,
d) den Abstand (a) mit einer Vorgabe zu vergleichen,
e) ein Arbeitssignal bei Erfüllen der Vorgabe bereitzustellen,
**dadurch gekennzeichnet,**
**dass** der Betätigungsbereich (22) nur eine vorgegebene Betätigungsdauer (tB) lang überwacht wird,
wobei das optische Sensorsystem (30) eine Überwachungseinheit (60) aufweist, die dazu ausgebildet ist, Bilder (61) auszuwerten, die vom optischen Sensor (50) aufgenommen worden sind, wobei
das optische Sensorsystem (30) den optischen Sensor (50) aufweist, um Licht aus dem Betätigungsbereich (21) zu empfangen, und das optische Sensorsystem (30) ein Lichtmodul (40) mit mindestens einer Lichtquelle (41) zum Emittieren von Licht aufweist, wobei
das Montagemodul (20) ein Anzeigeelement (43) aufweist, durch das sichtbares Licht emittierbar ist, um die Betätigungsdauer (t_{B}) für den Benutzer (10) sichtbar zu machen.

12. Authentifizierungssystem (16) nach Anspruch 11, **dadurch gekennzeichnet,**
**dass** die Lichtquelle (41) dazu ausgebildet ist, Licht im nicht sichtbaren Bereich zu emittieren.

13. Authentifizierungssystem (16) nach einem der Ansprüche 11 oder 12, **dadurch gekennzeichnet,**
**dass** das Anzeigeelement (43) zusätzlich dazu ausgebildet ist, eine Endfläche (23) des Betätigungsbereichs (22) auf einer Bodenfläche (15), auf der das Kraftfahrzeug (1) steht, sichtbar zu machen.

14. Authentifizierungssystem (16) nach einem der Ansprüche 11-13, **dadurch gekennzeichnet,**
**dass** die Endfläche (23) des Betätigungsbereichs (22) von geringeren räumlichen Ausmaßen ist als ein Körperteil, insbesondere eine Hand (12) oder ein Fuß (11), des Benutzers (10).

15. Authentifizierungssystem (16) nach einem der Ansprüche 11-14, **dadurch gekennzeichnet,**
**dass** der optische Sensor (50) einen Bildsensor (53) mit Pixeln (54) aufweist, wobei der Körperteil (11, 12) des Benutzers (10) im Betätigungsbereich (22) und/oder der Betätigungsbereich (22) mit n Pixeln (54) darstellbar ist, wobei insbesondere 2 ≤ n ≤ 10, bevorzugt n=2 beträgt, und/oder dass das optische Sensorsystem (30) geeignet ist, vor der Authentifizierung einen außerhalb des Kraftfahrzeugs (1) liegenden Detektionsbereich (21) zu überwachen und im Falle eines Erkennens des Benutzers (10) im Detektionsbereich (21) ein Signal für den Start einer Authentifizierungsüberprüfung zwischen einem ID-Geber (13) und einem Zugangskontrollsystem (14) des Kraftfahrzeuges (1) auszulösen.

16. Authentifizierungssystem (16) nach einem der Ansprüche 11-15, **dadurch gekennzeichnet,**
**dass** der optische Sensor (50) und/oder das Lichtmodul (40) dazu ausgebildet sind, sowohl zur Überwachung des Detektionsbereichs (21) als auch zum Überwachen des Betätigungsbereichs (22) eingesetzt zu werden, und/oder dass der optische Sensor (50) und/oder das Lichtmodul (40) ein starres Linsensystem (42, 51) aufweisen.

## Claims

1. A method (70) for providing an operating signal for a motor vehicle (1) comprising the steps of:
a) receiving a signal indicating that an authorised user (10) has been authenticated,
b) monitoring an actuation region (22) outside the motor vehicle (1) via an optical sensor system (30),
c) detecting a distance (a) between an object (18) in the actuation region (22) and an optical sensor (50) via the optical sensor system (30),
d) comparing the distance (a) with a specification via the optical sensor system (30),
e) providing an operating signal if the specification is satisfied,
**characterized in that**
the actuation region (22) is only monitored for a predetermined actuating period (tB).

2. The method (70) according to claim 1,
**characterized in that**
the operating signal is a signal for unlocking and/or locking and/or opening and/or closing a moving part (2, 3) of the motor vehicle (1), wherein the moving part (2, 3) is particularly a tailgate (2) or a side door (3) and/or a sliding door.

3. The method (70) according to claim 1 or 2,
**characterized in that**
the specification corresponds to a fixed, predetermined minimum distance condition of distance (a) between the object (18) and the optical sensor (50).

4. The method (70) according to any one of the preceding claims,
**characterized in that**
the specification corresponds to a permanently prescribed minimum distance between the object (18) and the optical sensor (50) stored in the optical sensor system (30).

5. The method (70) according to any one of the preceding claims,
**characterized in that**
the specification corresponds to a minimum value for a ratio between the distance (a) between object (18) and optical sensor (50) and a distance (b) between a limit area (23) of actuation region (22) and the optical sensor (50), wherein the limit area (23) is particularly located on a ground surface (15) on which the motor vehicle (1) is standing.

6. The method (70) according to any one of the preceding claims,
**characterized in that**
the specification corresponds to a fixed maximum distance (d), predetermined and stored in the optical sensor system (30), between a surface (31) of an object (18) facing the optical sensor (50) and the limit area (23) of the actuation region (22), which is particularly located on the ground surface (15).

7. The method (70) according to any one of the preceding claims,
**characterized in that**
the optical sensor system (30) emits a plurality of light pulses (62) in succession, a time interval (t_{z}) for receiving the light pulses (62) is predetermined by the optical sensor system (30), and the distance (a) is detected in step (c) on the basis of the intensity of the light pulses (62) received in time interval (tz).

8. The method (70) according to any one of the preceding claims,
**characterized in that**
in step b) the recognition images (64) that are created using the reflected light from light module (40), and comparison images (63) that have been created with interference light, without the reflected light from light module (40), are captured and evaluated in such manner that a modified recognition image is generated, from which the interference light is removed.

9. The method (70) according to any one of the preceding claims,
**characterized in that**
the operating signal is only provided upon fulfilment of at least one further specification, particularly the size of the object (18), a residence duration of the object (18) in the actuation region (22), a defined movement sequence of the object (18) in the actuation region (22) and/or removal of the object (18) from the actuation region (22) within a predetermined removal time (t_{E}).

10. The method (70) according to any one of the preceding claims,
**characterized in that**
a alert signal perceptible to the user (10) is emitted before the operating signal is provided.

11. An authentication system (16) with an access control system (14), an ID transmitter (13) and an assembly module (20) for a motor vehicle (1), with an optical sensor system (30) that is capable of:
a) receiving a signal indicating that an authorised user has been authenticated,
b) monitoring an actuation region (22) outside the motor vehicle (1),
c) detecting a distance (a) between an object (18) in the actuation region (22) and an optical sensor (50) of the sensor system (30),
d) comparing the distance (a) with a specification,
e) providing an operating signal if the specification is satisfied,
**characterized in that** the actuation region (22) is only monitored for a predetermined actuating period (t_{B}), wherein the optical sensor system (30) comprises a monitoring unit (60) which is designed to evaluate images (61) captured by the optical sensor (50), and the optical sensor system (30) comprises the optical sensor (50) to receive light from the actuation region (21), and the optical sensor system (30) comprises a light module (40) with at least one light source (41) for emitting light.

12. The authentication system (16)according to any one of the preceding claims,
**characterized in that**
the light source (41) is designed to emit light in the invisible range.
the assembly module (20) has a display element (43) via which visible light can be emitted to render at least a part of the actuation region (22) and/or the actuating duration (ts) visible to the user (10).

13. The assembly module (20) according to any one of the preceding claims,
**characterized in that**
the display element (43) is additionally designed to render a limit area (23) of the actuation region (22) visible on a ground surface (15) on which the motor vehicle (1) is standing.

14. The assembly module (20) according to any one of the preceding claims,
**characterized in that**
the limit area (23) of the actuation region (22) has smaller spatial dimensions than a body part, particularly a hand (12) or foot (11) of the user (10).

15. The assembly module (20) according to any one of the preceding claims,
**characterized in that**
the optical sensor (50) comprises an image sensor (53) with pixels (54), wherein the body part (11, 12) of the user (10) in the actuation region (22) and/or the actuation region (22) can be represented with n pixels (54) in which particularly, 2 ≤ n ≤ 10, preferably n = 2 and/or that
the optical system (30) is designed to
monitor a detection region (21) outside of the motor vehicle (1) before authentication, and in the event that a user (10) is recognised in the detection area (21) to trigger a signal for starting an authentication check between a ID transmitter (13) and an access control (14) of the motor vehicle (1).

16. The assembly module (20) according to any one of the preceding claims,
**characterized in that**
the optical sensor (50) and/or the light module (40) are designed to be used both to monitor the detection region (21) and to monitor the actuation region (22) and/or that
the optical sensor (50) and/or the light module (40) include(s) a rigid lens system (42, 51).

## Revendications

1. Procédé (70) servant à fournir un signal de travail pour un véhicule automobile (1), avec des étapes suivantes :
a) la réception d'un signal selon lequel un utilisateur (10) autorisé est authentifié,
b) la surveillance d'une zone d'actionnement (22) située à l'extérieur du véhicule automobile (1) par un système de capteur (30) optique,
c) la détection d'une distance (a) d'un objet (18) dans la zone d'actionnement (22) par rapport à un capteur (50) optique par le système de capteur (30) optique,
d) la comparaison de la distance (a) à une spécification par le système de capteur (30) optique,
e) la fourniture d'un signal de travail lorsque la spécification est remplie,
**caractérisé en ce que**
la zone d'actionnement (22) est surveillée seulement le temps d'une durée d'actionnement (tB) spécifiée.

2. Procédé (70) selon la revendication 1,
**caractérisé en ce que**
le signal de travail est un signal servant à déverrouiller et/ou verrouiller et/ou ouvrir et/ou fermer une partie (2, 3) mobile du véhicule automobile (1), dans lequel en particulier la partie (2, 3) mobile est un hayon (2) ou une portière latérale (3) et/ou une portière coulissante.

3. Procédé (70) selon la revendication 1 ou 2,
**caractérisé en ce que**
la spécification corresponde à une condition de distance minimale de la distance (a) de l'objet (18) par rapport au capteur (50) optique.

4. Procédé (70) selon l'une quelconque des revendications précédentes,
**caractérisé en ce que**
la spécification correspond à une distance minimale, spécifiée de manière fixe et enregistrée dans le système de capteur (30) optique, de l'objet (18) par rapport au capteur (50) optique.

5. Procédé (70) selon l'une quelconque des revendications précédentes,
**caractérisé en ce que**
la spécification correspond à une valeur minimale pour un rapport entre la distance (a) de l'objet (18) par rapport au capteur (50) optique et une distance (b) d'une face d'extrémité (23) de la zone d'actionnement (22) par rapport au capteur (50) optique, dans lequel la face d'extrémité (23) se trouve en particulier au niveau d'une face de fond (15), sur laquelle se situe le véhicule automobile (1).

6. Procédé (70) selon l'une quelconque des revendications précédentes,
**caractérisé en ce que**
la spécification correspond à un éloignement (d) maximal, spécifié de manière fixe et enregistré dans le système de capteur (30) optique, d'une surface (31), tournée vers le capteur (50) optique, de l'objet (18) par rapport à la face d'extrémité (23) de la zone d'actionnement (22), qui se trouve en particulier au niveau de la face de fond (15).

7. Procédé (70) selon l'une quelconque des revendications précédentes,
**caractérisé en ce que**
le système de capteur (30) optique émet plusieurs impulsions lumineuses (62) les unes après les autres, un intervalle de temps (tz) est spécifié pour recevoir les impulsions lumineuses (62) par le système de capteur (30) optique et la distance (a) dans l'étape c) est détectée par l'intermédiaire de l'intensité des impulsions de lumière (62) reçues dans l'intervalle de temps (t_{z}).

8. Procédé (70) selon l'une quelconque des revendications précédentes,
**caractérisé en ce**
**qu'**à l'étape b), des images de reconnaissance (64), qui ont été générées à l'aide de la lumière réfléchie du module lumineux (40), et des images de comparaison (63), qui ont été générées sans la lumière réfléchie du module lumineux (40) à l'aide de lumière parasite, sont prises et sont évaluées de telle sorte qu'une image de reconnaissance modifiée est générée, de laquelle la lumière parasite est éliminée.

9. Procédé (70) selon l'une quelconque des revendications précédentes,
**caractérisé en ce que**
seulement lorsqu'au moins une autre spécification est remplie, en particulier une taille de l'objet (18), une durée de séjour de l'objet (18) dans la zone d'actionnement (22), une séquence de déplacements définie de l'objet (18) dans la zone d'actionnement (22) et/ou un retrait de l'objet (18) pendant une durée de retrait (t_{E}) spécifiée hors de la zone d'actionnement (22), le signal de travail est fourni.

10. Procédé (70) selon l'une quelconque des revendications précédentes,
**caractérisé en ce**
**qu'**un signal d'avertissement perceptible par l'utilisateur (10) est émis avant le déclenchement du signal de travail.

11. Système d'authentification (16) avec un système de contrôle d'accès (14), un transmetteur d'identification (13) et un module de montage (20) pour un véhicule automobile (1), avec un système de capteur (30) optique, qui est adapté
a) pour recevoir un signal selon lequel un utilisateur autorisé est authentifié,
b) pour surveiller une zone d'actionnement (22) située à l'extérieur du véhicule automobile (1),
c) pour détecter une distance (a) d'un objet (18) dans la zone d'actionnement (22) par rapport à un capteur (50) optique du système de capteur (30),
d) pour comparer la distance (a) à une spécification,
e) pour fournir un signal de travail lorsque la spécification est remplie, **caractérisé en ce**
**que** la zone d'actionnement (22) est surveillée seulement le temps d'une durée d'actionnement (tB) spécifiée,
dans lequel le système de capteur (30) optique présente une unité de surveillance (60), qui est conçue pour évaluer des images (61), qui ont été prises par le capteur (50) optique, dans lequel
le système de capteur (30) optique présente le capteur (50) optique pour recevoir de la lumière provenant de la zone d'actionnement (21), et le système de capteur (30) optique présente un module lumineux (40) avec au moins une source de lumière (41) servant à émettre de la lumière,
dans lequel
le module de montage (20) présente un élément d'affichage (43), à travers lequel de la lumière visible peut être émise pour rendre visible à l'utilisateur (10) la durée d'actionnement (t_{B}).

12. Système d'authentification (16) selon la revendication 11,
**caractérisé en ce**
**que** la source de lumière (41) est conçue pour émettre de la lumière dans la plage non visible.

13. Système d'authentification (16) selon l'une quelconque des revendications 11 ou 12,
**caractérisé en ce**
**que** l'élément d'affichage (43) est en outre réalisé pour rendre visible une face d'extrémité (23) de la zone d'actionnement (22) sur une face de sol (15), sur laquelle se situe le véhicule automobile (1).

14. Système d'authentification (16) selon l'une quelconque des revendications 11 - 13,
**caractérisé en ce**
**que** la face d'extrémité (23) de la zone d'actionnement (22) est de dimensions spatiales plus petites qu'une partie du corps, en particulier une main (12) ou un pied (11), de l'utilisateur (10).

15. Système d'authentification (16) selon l'une quelconque des revendications 11 - 14,
**caractérisé en ce**
**que** le capteur (50) optique présente un capteur d'image (53) avec des pixels (54), dans lequel la partie de corps (11, 12) de l'utilisateur (10) dans la zone d'actionnement (22) et/ou la zone d'actionnement (22) peut être représentée avec n pixels (54), dans lequel en particulier 2 ≤ n ≤ 10, de manière préférée n = 2, et/ou que le système de capteur (30) optique est adapté pour surveiller avant l'authentification une zone de détection (21) située à l'extérieur du véhicule automobile (1) et pour déclencher dans le cas d'une identification de l'utilisateur (10) dans la zone de détection (21) un signal pour le démarrage d'une vérification d'authentification entre un transmetteur d'identification (13) et un système de contrôle d'accès (14) du véhicule automobile (1).

16. Système d'authentification (16) selon l'une quelconque des revendications 11 - 15,
**caractérisé en ce**
**que** le capteur (50) optique et/ou le module lumineux (40) sont configurés pour être employés à la fois pour surveiller la zone de détection (21) et pour surveiller la zone d'actionnement (22), et/ou que le capteur (50) optique et/ou le module lumineux (40) présente un système de lentilles (42, 51) rigide.
